# EUROPÄISCHE PATENTSCHRIFT

(11) **EP 1 072 867 B1**
(45) Veröffentlichungstag und Bekanntmachung des Hinweises auf die Patenterteilung: **10.06.2015**
(21) Anmeldenummer: 00113931.0
(22) Anmeldetag: 30.06.2000
(51) Int. Cl.: F15B 13/04, F15B 15/28, G01D 5/14, G01D 5/251

(54) **Elektrischer Wegaufnehmer für ein Hydraulik-Gerät**
Electrical displacement sensor for hydraulic apparatus
Capteur électrique de déplacement pour appareil hydraulique

(30) Priorität: 28.07.1999 DE 29913183 U
(43) Veröffentlichungstag der Anmeldung: 31.01.2001
(60) Teilanmeldung: 01124894.5
(73) Patentinhaber: HAWE Hydraulik SE, 81673 München (DE)
(72) Erfinder: Heusser, Martin, Dipl-Ing. ETH, 81245 München (DE); Csiszar, Miklos, 81739 München (DE)
(74) Vertreter: Grünecker Patent- und Rechtsanwälte PartG mbB

(56) Entgegenhaltungen:
- US-A- 4 081 635
- US-A- 4 608 870
- US-A- 5 070 220

## Beschreibung

Die Erfindung betrifft einen Wegeschieber der im Oberbegriff des Anspruchs 1 angegebenen Art.

Im Gebiet der Hydraulik liegen zahllose Anwendungsfälle hydraulischer Geräte vor, bei denen eine exakte elektrische Information in Form eines Signals darüber benötigt wird, wo sich das verstellbare Element gerade befindet, bzw. ob es sich innerhalb eines bestimmten Abschnitts des Verstellweges befindet, oder nicht. Zu diesem Zweck werden elektrische Wegaufnehmer eingesetzt, die aus der Verstellbewegung des Elementes Signale ableiten und an übergeordnete Steuervorrichtungen oder Steuerkomponenten übermitteln.

Aus der Druckschrift D 7260 ST, März 1992, der Fa. Heilmeier & Weinlein, 81673 München, sind Wegeschieberblöcke des Typs DLS für Flurförderfahrzeuge, z.B. Gabelstapler, bekannt, bei denen ein Wegaufnehmer vorgesehen ist, mit dem auf elektrischen Weg Signale erzeugt werden, die zumindest anzeigen, ob sich das verstellbare Element innerhalb des sogenannten Nullstellungsbereiches befindet oder nicht, oder/und in weitestgehend analoger Form repräsentieren, wo sich das verstellbare Element innerhalb seines Verstellweges gerade befindet. Auf den Seiten 6, 7, 8, 10 der Druckschrift werden konstruktive Lösungen des Wegaufnehmers dargestellt. Mit dem verstellbaren Element ist eine Steuerkurve verbunden, die als Betätiger für einen Mikroschalter fungiert, der auf einer am Wegeschieberblock montierten Blechkonsole justierbar angebracht ist. Innerhalb des Nullstellungsbereiches des Elementes wird der Schalter gedrückt. Sein Signal repräsentiert den Nullstellungsbereich, der bei solchen Hydraulikgeräten zumeist nur wenige Millimeter lang ist. Zusätzlich kann ein Potentiometer angebracht werden, das mit dem Element verstellt wird und ein Analogsignal über meist den gesamten Verstellweg erzeugt. Ist der Wegaufnehmer herstellerseitig bereits angebracht, dann besteht zufolge unvermeidbarer Einflüsse beim Transport und der Lagerhaltung meist die Notwendigkeit, Feinjustierungen am Einsatzort des Hydraulikgerätes vorzunehmen. Ferner besteht die Gefahr, dass die vorstehenden Komponenten des Wegaufnehmers beschädigt werden. Außerdem sind die Wegaufnehmer verschleißanfällig und wartungsbedürftig.

In dem gemäß US 4 081 635 A als elektrischer Strömungsschalter verwendeten Wegeschieber spricht der gehäusefest montierte Reed-Schalter nur an einem Punkt innerhalb des Stellweges des Schieberkolbens an, so dass die vom Reed-Schalter gegebene Information nur erkennen lässt, ob sich der Schieberkolben bis zu diesem Punkt bewegt hat, oder nicht, bzw. ob der Schieberkolben sich noch in den Abschnitt des gesamten Stellweges vor dem Punkt oder bereits in dem Abschnitt hinter dem Punkt befindet. Die vom Reed-Schalter gegebene Information bezieht sich auf eine Strömungsrate bzw. einen Druckunterschied zwischen dem Einlass-Strömungsweg und dem Auslass-Strömungsweg, oder auf eine Absperrkondition zwischen den Strömungswegen. Der Schieberkolben arbeitet mit einem Nullstellungsbereich, der innerhalb des gesamten Stellweges des Schieberkolbens einen Wegabschnitt einer bestimmten Größe bildet. Der Reed-Schalter vermag keine Information zu liefern, wenn sich der Schieberkolben aus dem Nullstellungsbereich heraus- oder in diesen hineinbewegt, und wenn sich der Schieberkolben innerhalb des Nullstellungsbereiches befindet.

US 5 070 220 A betrifft ein Messgerät, das eine Strömung daraufhin abtastet, ob eine Strömungskondition eine vorbestimmte Strömungsratenschwelle überschreitet oder nicht. Das Messgerät ist als Drosselventil mit einem beweglichen Ventilelement ausgebildet, das ohne Absperrstellung zwischen einem Einlass-Strömungsweg und einem Auslass-Strömungsweg angeordnet ist und durch die Driackdifferenz der durch einen Drosselspalt gezwungenen Strömung gegen Federkraft axial verlagert wird, sobald der Strömungsschwellwert überschritten ist. Der mit dem Ventilelement bewegliche Permanentmagnet betätigt dann einen stationär am Gehäuse außen angebrachten Reed-Schalter. Die Information des Signals des Reed-Schalters reflektiert beim Signalwechsel nur eine bestimmte Position des Ventilelementes, und ob sich das Ventilelement noch innerhalb des Wegabschnittes des gesamten Stellweges befindet, der vor dem Schaltpunkt liegt, oder nicht.

US 4 608 870 A bezieht sich auf einen Druckspeicher mit einem in einem Gehäuse linear verschiebbaren Kolben. Um das Vorliegen eines vorbestimmten Drucks zu melden, sind im Kolben mehrere Permanentmagnete in Kolbenbewegungsrichtung beabstandet angeordnet, und ist außerhalb des Gehäuses eine in Kolbenbewegungsrichtung orientierte Serie beabstandeter und quer zur Kolbenbewegungsrichtung orientierter Reed-Schalter vorgesehen. Die Serie der Reed-Schalter ist über eine temperatursensitive Abstützung gegenüber dem Gehäuse gelagert. Die Abstützung verlagert die Serie der Reed-Schalter in Abhängigkeit von der gefühlten Temperatur, um bei der Druckmeldung Temperatureinflüsse zu eliminieren.

Der Erfindung liegt die Aufgabe zugrunde, einen Wegeschieber mit einem Wegaufnehmer zu schaffen, der ohne Nachjustierung funktionssicher, wartungsfrei und kostengünstig ist sowie sehr aussagefähige Signale liefert. Der Wegeschieber soll einsetzbar sein, wenn ein elektrisches Signal zur Überwachung eines Nullstellungsbereiches innerhalb des gesamten Stellwegs des verstellbaren Schieberkolbens benötigt wird.

Die gestellte Aufgabe wird mit den Merkmalen des Anspruchs 1 gelöst.

Durch gegenseitige Abstimmung des Ansprechverhaltens des Reed-Schalters, des Abstandes von Reed-Schalter und Stabmagnet und der Magnetisierung und Dimension des Stabmagneten, lässt sich der Wegabschnitt des Schieberkolbens sehr genau einstellen, für den ein Signal oder kein Signal anliegt, repräsentativ dafür, ob sich der Schieberkolben innerhalb oder außerhalb des Wegabschnittes befindet. Der Reed-Schalter und der Stabmagnet lassen sich so in den Wegeschieber integrieren, dass ihre gegenseitigen Relativpositionen durch die Lagerhaltung und den Transport nicht mehr verändert werden. Im Wegeschieber trägt der Schieberkolben den Stabmagneten in einem Verlängerungsteil, wobei der Reed-Schalter seitlich neben dem Stabmagneten positioniert ist. Dies führt zu sehr kleinen Abmessungen des Wegaufnehmers quer zur Bewegungsrichtung des Schieberkolbens. Am Gehäuse ist ein Gehäuseaufsatz für den Reed-Schalter angebracht, der zumindest in dem Bereich, in welchem der Reed-Schalter mit dem Stabmagneten kooperiert, aus nicht-magnetischem Material besteht. Der Wegaufnehmer ist wartungsfrei und funktionssicher. Bei der Relativbewegung des in Bewegungsrichtung liegenden Stabmagneten gegenüber dem dazu parallelen Reed-Schalter öffnet innerhalb des Kraftfeld-Schwachbereichs der Reed-Schalter, während er bei Eintreten in die an den Schwachbereich beiderseits angrenzenden Starkbereiche des Kraftfeldes schließt. Dieses Schaltverhalten des Reed-Schalters ist exakt reproduzierbar. Es besteht keine Notwendigkeit mehr, den Wegaufnehmer am Einsatzort des Wegeschiebers nachzujustieren.

Der Kraftfeld-Schwachbereich des Stabmagneten wird zum Überwachen des Kolbenschieber-Nullstellungsbereiches benutzt, der durch eine axiale Steuerkantenüberdeckung im Wegeschieber diktiert und im Regelfall nur wenige Millimeter lang ist, z.B. ± 2,0 mm. Es resultiert aus der Nutzung eines seitlichen Kraftfeld-Schwachbereichs des Stabmagneten überraschend eine sehr zuverlässige Funktion des Wegaufnehmers zur Überwachung des relativ kleinen Wegabschnitts innerhalb des Stellwegs des Schieberkolbens. Natürlich kann das anhand des seitlichen Kraftfeld-Schwachbereiches des Stabmagneten erzeugte Signal des Reed-Schalters invertiert verarbeitet werden.

Bestimmte Dimensionen des Stabmagneten, L:B ca. 5:1, gewährleisten eine lange Standzeit des Wegaufnehmers und einen ausgeprägten Kraftfeld-Schwachbereich.

Durch äußere Einflüsse und Alterung kaum beeinflussbare magnetische Eigenschaften des Stabmagneten ergeben sich, falls dieser aus einer gesinterten Al-Ni-Co-Legierung besteht. Es ist jedoch nicht ausgeschlossen, dass auch Stabmagneten aus anderen magnetisierbaren Werkstoffen den Anforderungen genügen.

Mit einer in Bewegungsrichtung verstellbar angebrachten Tragplatte am Gehäuseaufsatz lässt sich der Reed-Schalter herstellerseitig bereits exakt einjustieren.

Um einen möglichst großen Justierbereich für den Reed-Schalter zu erhalten und wahlweise den Wegabschnitt des Stellweges des Schieberkolbens herausgreifen zu können, ist die Tragplatte umsetzbar und sind die Befestigungsmittel für den Reed-Schalter zu den Befestigungseinrichtungen der Tragplatte versetzt.

Der Wegeschieber ist zweckmäßig ein 3/3- oder 4/3-Wegeschieber (Dreiwege/Dreistellungs-Wegeschieber oder Vierwege/Dreistellungs-Wegeschieber) für einen Stapler, bei dem die Steuerung einer drehzahlregelbaren Pumpe in Abhängigkeit von der Stellung oder Stellbewegung des Schieberkolbens erfolgt. Mittels des anhand des Schwachbereiches erzeugten Aus-Signals des Reed-Schalters, entweder in invertierter Form oder wie erzeugt, lässt sich der Nullstellungsbereich des Schieberkolbens genau abtasten, um die Ein- und Ausschaltpunkte der Pumpe steuern zu können.

Bei dem Wegeschieber wird der Schieberkolben manuell, hydraulisch, mechanisch, elektromotorisch, pneumatisch oder auf andere Weise verstellt. Der Wegaufnehmer könnte die Verstellbewegung auch über dem Betätigungsmechanismus für den Schieberkolben abgreifen.

Zusätzliche Informationen über die Position des Schieberkolbens innerhalb des Wegabschnitts und/oder ein analoges Signal, das den gesamten Stellweg repräsentiert, lassen sich mittels eines die Magnetfelddichte des Kraftfeldes desselben Stabmagneten abtastenden Hall-Elements beschaffen. Das Hall-Element nutzt den an den Kraftfeld-Schwachbereich angrenzenden Kraftfeldübergang in den Starkbereich, d.h., einen Verlauf der Magnetfelddichte, der mit geringem Aufwand zu einem linearen Signal führt.

Anhand der Zeichnung werden Ausführungsformen des Erfindungsgegenstandes erläutert. Es zeigen:
- Fig. 1: schematisch einen Wegeschieber mit einem Wegaufnehmer,
- Fig. 2: schaubildlich das Funktionsprinzip des Wegaufnehmers,
- Fig. 3: einen Längsschnitt durch einen Wegeschieber-Block, beispielsweise eines Staplers, mit einem Wegaufnehmer, und
- Fig. 4: Diagramme mit Kennlinien, wie sie sich bei dem Webeschieber aus der Verwendung des Wegaufnehmers ergeben.

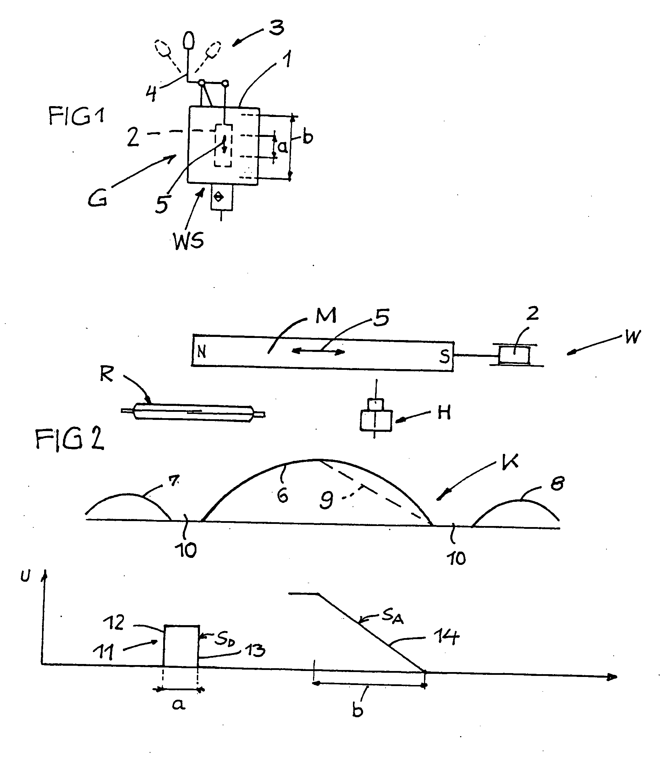

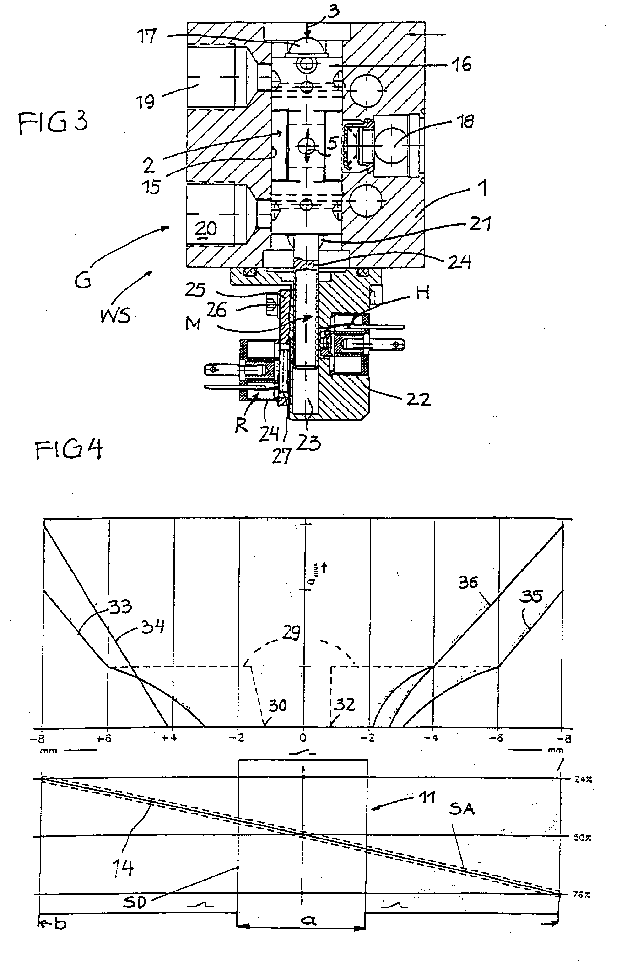

In Fig. 1 ist ein hydraulisches Gerät G schematisch dargestellt, beispielsweise ein Wegeschieber WS, der ein Gehäuse 1 und ein im Gehäuse in einer Bewegungsrichtung 5 verstellbares Element 2 enthält, z.B. einen Schieberkolben 16 zum Steuern von Druckmittel (Fig. 3). Die Verstellung wird mit einem Verstellmechanismus 3 bewerkstelligt, beispielsweise mittels eines Handhebels 4. Anstelle des Handhebels könnte auch ein manueller, mechanischer, elektromotorischer, magnetischer, pneumatischer oder hydraulischer Verstellmechanismus vorgesehen sein. Das Element 2 durchläuft einen Verstellweg b, innerhalb dessen sich ein bestimmter kleinerer Wegabschnitt a, z.B. ein sogenannter Nullstellungsbereich, befindet. Mittels eines elektrischen Wegaufnehmers W wird der Wegabschnitt a des Stellwegs b überwacht, und wird ein Signal abgeleitet, das repräsentativ dafür ist, ob sich das Element 2 innerhalb des Wegabschnitts a befindet, oder nicht.

Der Wegaufnehmer W (Fig. 2) besteht aus einem Stabmagneten M, der mit dem Element 2 bewegungsgekoppelt ist und mit seiner Längsachse parallel zur Bewegungsrichtung 5 liegt, und einem stationären Reed-Schalter R, dessen Längsachse zumindest weitgehend parallel zur Längsachse des Stabmagneten M liegt, und der durch das magnetische Kraftfeld K des Stabmagneten M beaufschlagbar ist.

Auf den gleichen Stabmagneten M kann zusätzlich ein Hallelement H ausgerichtet sein, das auf die Magnetfelddichte im Kraftfeld K des Stabmagneten M anspricht.

Der Stabmagnet M besteht zweckmäßigerweise aus einer gesinterten Aluminium-Nickel-Kobalt-Legierung. Seine Länge steht zur Dicke bzw. zum Durchmesser in einem Verhältnis von 3:1 bis 6:1, vorzugsweise von 4:1 bis 5:1. Ein konkretes Ausführungsbeispiel wäre ein Stabmagnet mit einem Durchmesser von 5 mm und einer Länge von 25 mm. Aus dem Ansprechbereich des parallel dazu angeordneten Reed-Schalters R gesehen, hat das Kraftfeld K des liegenden Stabmagneten M nahe den beiden Polenden jeweils einen Starkbereich 7, 8 und zwischen diesen einen ausgeprägten Starkbereich 6. Die Bereiche 7, 8, 6 sind voneinander durch zwei Schwachbereiche 10 getrennt, deren in Bewegungsrichtung 5 gesehene Längen im Regelfall kleiner sind als die Längen der Bereiche 7, 6, 8. Die Schwachbereichlänge entspricht an der Position des Reed-Schalters R der Länge des Nullstellungsbereiches des Elementes 2, z.B. ± 2,0mm. Einer der Schwachbereiche 10 des Kraftfeldes K wird zur Betätigung des Reed-Schalters R bei der Bewegung des Stabmagneten M in Bewegungsrichtung 5 eingesetzt, um ein Signal SD zu erzeugen, das (z.B. durch Invertieren) die Form eines Rechtecks 11 mit vorderen und hinteren Flanken 12, 13 und dazwischen einen konstanten Pegel hat. Der Abstand zwischen den Flanken 12, 13 in Bewegungsrichtung entspricht dem Wegabschnitt a im Stellweg b des Elements 2. Das Signal SD ist ein digitales Signal (Ein/Aus), das aussagefähig dafür ist, ob sich das Element 2 im Wegabschnitt a (Nullstellungsbereich) befindet, oder nicht.

Additiv kann das Signal SD mit einem Analogsignal SA des Hallelements H verknüpft werden, das einen Übergang vom Schwachbereich 10 in den ausgeprägten Starkbereich 6, bzw. dessen gestrichelt angedeutete Flanke 9 abgreift, um über den Stellweg b das Analogsignal SA abzuleiten, das als lineares Signal 14 verarbeitbar ist und analog repräsentiert, wo innerhalb des Stellweges b sich das Element 2 gerade befindet oder in welche Richtung es sich bewegt.

In Fig. 3 ist das Hydraulikgerät G ein Wegeschieber WS, in dessen Gehäuse 1 in einer Gehäusebohrung 15 der das Element 2 bildende Schieberkolben 16 in der Bewegungsrichtung 5 verstellbar ist. An einem Ende 17 des Schieberkolbens 16 greift der Verstellmechanismus 3 an. Am anderen Ende des Schieberkolbens ist ein rohrförmiger Verlängerungsteil 24 angeschlossen, der den Stabmagneten M aufnimmt.

Mit dem Schieberkolben 16 werden Strömungsverbindungen zwischen einem Druckmittelzulauf 18, Verbraucheranschlüssen 19, 20 und einem Rücklaufanschluss 21 im Gehäuse 1 gesteuert. Da, wie bei solchen Wegeschiebern üblich, zur Vermeidung von Strömungsverlusten oder unrichtigen Drucksignalen zwischen einzelnen Steuerkanten im Gehäuse und am Schieberkolben eine axiale Überdeckung eingehalten werden muss, besitzt der Schieberkolben 16 einen zentralen Nullstellungsbereich, innerhalb dessen der Druckmittelzulauf 18 mit keinem der Verbraucheranschlüsse 19, 20 verbunden ist. Dieser Nullstellungsbereich kann sich über mehrere Millimeter (z.B. ± 2 mm) erstrecken, und soll mittels des Wegaufnehmers W überwacht werden, um Signale für zugehörige Steuerkomponenten auf elektrischem Wege abzuleiten, mit denen bestimmte Steuerroutinen eingeleitet werden , abhängig davon, ob sich der Schieberkolben 16 im Nullstellungsbereich befindet, oder nicht.

Der Wegaufnehmer W ist in einen Gehäuseaufsatz 22 eingegliedert, der an einer Seite des Gehäuses 1 befestigt ist und zumindest teilweise aus nicht magnetischem Material besteht (aus Kunststoff oder einem Leichtmetall). Der Verlängerungsteil 24 ist in einer mit Druckmittel beaufschlagbaren Kammer 23 (Blindbohrung) des Gehäuseaufsatzes 22 verschiebbar. An einer Seitenfläche des Gehäuseaufsatzes 22, die parallel zur Bewegungsrichtung 5 ist, ist eine Tragplatte 25 mit Befestigungseinrichtungen 26 festgelegt, die den Reed-Schalter R trägt. Für den Reed-Schalter R ist ein Fenster 27 oder ein Befestigungsmittel in der Tragplatte 25 vorgesehen. Der Reed-Schalter R ist in einem Gehäuse 24 untergebracht, das Anschlusskontakte oder Steckfahnen für einen darauf festzulegenden Stecker hat.

Die Tragplatte 25 lässt sich nach Lockern der Befestigungseinrichtungen 26 in einem begrenzten Ausmaß parallel zur Bewegungsrichtung 5 verstellen, um den Reed-Schalter R exakt auf den Schwachbereich 10 des Kraftfeldes K bzw. den Nullstellungsbereich des Kolbenschiebers 16 einzujustieren. Da die Befestigungsmittel 27 für den Reed-Schalter R an der Tragplatte 25 versetzt sind zu den Befestigungsmitteln 26, kann der Justierbereich vergrößert werden, indem die Tragplatte 25 um 180° gewendet wird, so dass dann der Reed-Schalter R näher beim Gehäuse 1 als gezeigt läge.

Das Hallelement H, das auf derselben Tragplatte 25 wie der Reed-Schalter R befestigt sein könnte, ist in Fig. 3 an der anderen Seite des Stabmagneten M im Gehäuseaufsatz 22 gezeigt. Das Hallelement H ist auf den Starkbereich 6 oder den Übergang 9 in den Starkbereich 6 des Kraftfeldes K des Stabmagneten M ausgerichtet, und überwacht z.B. den gesamten Stellweg b des Schieberkolbens 16, um ein lineares Analogsignal SA abzuleiten, das gegebenenfalls steuerungsseitig mit dem digitalen Signal SD des Reed-Schalters R verknüpft wird, um Aussagen zur Position oder Verstellrichtung des Schieberkolbens 16 innerhalb des Nullstellungsbereiches zu erhalten.

Anhand Fig. 4 wird verdeutlicht, wie die Signale des Wegaufnehmers W zur hydraulischen Steuerung eingesetzt werden. Im unteren Teil von Fig. 4 ist innerhalb des Stellweges b der Signalverlauf der Signale SD und SA gezeigt. Das Signal SD liegt nur über den Wegabschnitt a entsprechend dem Nullstellungsbereich vor. Da der Reed-Schalter 28 außerhalb des Wegabschnittes a geschlossen und innerhalb des Wegabschnittes a offen ist, werden seine Signale invertiert. Das analoge Signal SA hat in Fig. 4 an der linken Seite den maximalen Wert und fällt bis zum rechten Ende im Wesentlichen linear ab. Die beiden Endpunkte entsprechen beispielsweise 24 und 76 % einer bestimmten Spannung.

Im obenliegenden Diagramm ist der Stellweg b in mehrere Abschnitte aufgeteilt, die jeweils 2,0 mm lang sind und von Null positiv und negativ ausgehen. Abhängig von der Verstellrichtung des Schieberkolbens 16 aus der Null-Lage nach links oder nach rechts wird eine drehzahlregelbare Pumpe am Punkt 30 bzw. 32 eingeschaltet und innerhalb des Wegabschnitts a bis auf eine Minimaldrehzahl 29 hochgefahren. In Verstellrichtung nach links wird diese Minimaldrehzahl 29 gehalten, bis bei + 6 mm die Drehzahl angehoben wird entsprechend der Kurve 33, die auch die Fördermenge des Druckmittels in den Verbraucheranschluss 19 oder 20 repräsentiert. Die Kurve 33 korrespondiert auch mit dem Hub eines Hydraulikverbrauchers, beispielsweise eines Neigezylinders eines Staplers, beim Neigen. Dieser Kurve 33 entspricht an der rechten Seite die Kurve 35, die das Neigen in der anderen Richtung repräsentiert. Die Kurven 34 und 36 repräsentieren die Fördermenge für bzw. den Hub eines Hubzylinders, der aus der Pumpe mit Druckmittel versorgt wird. Die Kurve 36 verdeutlicht das Heben unter Einsatz der Pumpe, während die Kurve 34 das Senken bei abgeschalteter Pumpe versinnbildlicht.

Das digitale Signal SD allein würde ausreichen (Weglassen des Hallelementes), um die Pumpensteuerung auf den Nullstellungsbereich des Schieberkolbens 16 abzustimmen.

## Patentansprüche

1. Hydraulischer Wegeschieber (WS) mit einem in einer Gehäusebohrung (15) eines Gehäuses (1) über einen festgelegten Weg (b) linear geführt verschiebbaren Schieberkolben (16), der innerhalb des Weges (b) über einen nicht punktförmigen Wegabschnitt (a) eines durch axiale Steuerkantenüberdeckungen zwischen dem Schieberkolben (16) und der Gehäusebohrung (15) bestimmten Nullstellungsbereiches verschiebbar ist, in dem der Schieberkolben (16) einen Druckmittelzulauf (18) und wenigstens einen Verbraucheranschluss (19, 20) voneinander blockiert, hingegen außerhalb des Wegabschnittes (a) den Druckmittelzulauf (18) mit einem Verbraucheranschluss (19 oder 20) verbindet, und mit einem Wegaufnehmer (W), der einen gehäusefest positionierten, signalerzeugenden Reed-Schalter (R) und einen schieberkolbenfest und mit zur Verschieberichtung des Schieberkolbens zumindest in etwa paralleler Stablängsachse positionierten Stabmagneten (M) als Betätiger des Reed-Schalters (R) umfasst, wobei der Reed-Schalter (R) bei einer relativen Verschiebebewegung des Stabmagneten (M) auf Stark- und Schwachbereiche (6, 7, 8; 10) des Kraftfeldes (K) des Stabmagneten (M) mit unterschiedlichen Signalen anspricht, **dadurch gekennzeichnet, dass** der Stabmagnet (M) in einem Verlängerungsteil (24) des Schieberkolbens (16) und der Reed-Schalter (R) in oder an einem aus zumindest zum Teil nicht-magnetischem Material bestehenden Gehäuseaufsatz (22) angeordnet sind, dass der Verlängerungsteil (24) in den Gehäuseaufsatz (22) eingreift, und dass der Stabmagnet (M) und der Reed-Schalter (R) in Verschieberichtung des Schieberkolbens (16) relativ zueinander und relativ zu dem den Nullstellungsbereich repräsentierenden Wegabschnitt (a) so positioniert sind, dass bei einer Verschiebung des Schieberkolbens (16) anhand eines Schwachbereiches (10) des Stabmagneten der Reed-Schalter (R) ein den den Nullstellungsbereich bestimmenden Wegabschnitt (a) repräsentierendes Signal (SD) zum Steuern von Ein- und Ausschaltpunkten einer an den Druckmittelzulauf (18) angeschlossenen Pumpe erzeugt.

2. Wegeschieber gemäß Anspruch 1, **dadurch gekennzeichnet, dass** der Stabmagnet (M) eine Länge aufweist, die zu seiner Stärke bzw. seinem Durchmesser in einem Verhältnis von 3:1 bis 6:1, vorzugsweise 4:1 bis 5:1, steht.

3. Wegeschieber gemäß Anspruch 1, **dadurch gekennzeichnet, dass** der Stabmagnet (M) aus einer gesinterten Aluminium-Nickel-Kobalt-Legierung besteht.

4. Wegeschieber gemäß Anspruch 1, **dadurch gekennzeichnet, dass** der Gehäuseaufsatz (22) eine in Verstellrichtung (5) des Schieberkolbens (16) verstellbare Tragplatte (25) für den Reed-Schalter (R) aufweist.

5. Wegeschieber gemäß Anspruch 4, **dadurch gekennzeichnet, dass** die Tragplatte (25) zu Befestigungsmitteln (26) der Tragplatte am Gehäuseaufsatz (22) in Bewegungsrichtung (5) versetzte Befestigungsmittel (27) für den Reed-Schalter (R) aufweist und in zwei um 180° gewendeten Lagen auf dem Gehäuseaufsatz (22) anbringbar ist, in denen die Befestigungsmittel (27) für den Reed-Schalter (R) unterschiedlich weit in Verstellrichtung des Schieberkolbens (16) vom Gehäuse (1) entfernt sind.

6. Wegeschieber gemäß Anspruch 1, **dadurch gekennzeichnet, dass** er ein 3/3- oder 4/3-Wegeschieber (WS) für einen einseitig oder doppelseitig über eine drehzahlregelbare Pumpe beaufschlagbaren Hydromotor ist, vorzugsweise für einen Stapler, und dass die Ein- und Ausschaltpunkte der Pumpe mittels des Signals (SD) gesteuert sind.

7. Wegeschieber gemäß wenigstens einem der vorhergehenden Ansprüche, **dadurch gekennzeichnet, dass** zusätzlich zu dem Reed-Schalter (R) als Analog-Wegaufnehmer im Gehäuseaufsatz (22) ein Hall-Element (H) in Verschieberichtung des Schieberkolbens (16) relativ zum Stabmagneten (M) derart gehäusefest positioniert ist, dass innerhalb des Stellweges (b) des Schieberkolbens (16) anhand eines an den Kraftfeld-Schwachbereich (10) in Richtung zur Stabmagneten-Längsmitte angrenzenden Kraftfeldübergangs (9) zu einem Starkbereich (6) ein Analogsignal (SA) erzeugbar ist.

## Claims

1. Hydraulic multiway slider valve (WS), comprising a slider piston (16) which is linearly guided displaced over a predetermined path (b) in a housing bore (15) of a housing (1), the slider piston (16) being displaceable within the path (b) over a non-punctiform path section (a) through a zero position region defined by axial control edge overlaps between the slider piston (16) and the housing bore (15), in which zero position region the slider piston (16) is blocking a pressure medium inlet (18) and at least one consumer port (19), (20) from another, while the slider piston outside of the path section (a) is connecting the pressure medium inlet (18) with one consumer port (19 or 20), and comprising a displacement sensor (W) including a signal generating Reed-switch (R) fixedly positioned in the housing (1) and a rod magnet (M) as an actuator of the Reed-switch (R), which rod magnet (M) is fixed at the slider piston and is positioned with its rod longitudinal axis at least substantially parallel to the sliding displacement direction of the slider piston (16), wherein the Reed-switch (R) responds by different signals during a relative sliding movement of the rod magnet (M) to strong and weak portions (6, 7, 8, 10) of the magnet field (K) of the rod magnet (M), **characterized in that** the rod magnet (M) is arranged in a prolongation part (24) of the slider piston (16) and the Reed-switch (R) is arranged within or at a housing attachment (22) consisting of at least partially non-magnetic material, that the prolongation part (24) engages into the housing attachment (22), and that the rod magnet (M) and the Reed-switch (R) are positioned in sliding displacement direction of the slider piston (16) relative to another and relative to the path section (a) representing the zero position region such that in case of a displacement of the slider piston (16) the Reed-switch (R) generates a signal (SD) caused by a weak portion (10) of the magnet field of the rod magnet (M), the signal (SD) representing the path section (a) determining the zero position region for controlling switch on and switch off-points of a pump connected with the pressure medium inlet (18).

2. Hydraulic multiway slider valve according to claim 1, **characterized in that** the rod magnet (M) has a longitudinal extension which has a ratio of 3:1 to 6:1, preferably 4:1 to 5:1 with the thickness or the diameter of the rod magnet (M).

3. Hydraulic multiway slider valve according to claim 1, **characterized in that** the rod magnet (M) consists of a sintered aluminum-nickel-cobalt-alloy.

4. Hydraulic multiway slider valve according to claim 1, **characterized in that** the housing attachment (22) comprises a carrier plate (25) for mounting the Reed-switch (R), which carrier plate (25) is adjustable in displacement direction (5) of the slider piston (16).

5. Hydraulic multiway slider valve according to claim 4, **characterized in that** the carrier plate (25) comprises Reed-switch fixation means (27), offset in displacement direction of the slider piston (16) with respect to carrier plate fixation means (26) of the housing attachment (22), and that the carrier plate (25) can be arranged on the housing attachment (22) in two positions rotated by 180°, in which positions the Reed-switch fixation means (27) are differently distant from the housing (1) in displacement direction of the slider piston (16).

6. Hydraulic multiway slider valve according to claim 1, **characterized in that** it is a 3/3- or 4/3- multiway slider valve (WS) for a hydro motor which is actuable uni-directionally or bi-directionally via a speed regulated pump, preferable for a forklift truck, and that by means of the signal (SD) the switch-on and the switch-off-points of the pump are controlled.

7. Hydraulic multiway slider valve according to at least 1 of the preceding claims, **characterized in that** in addition to the Reed-switch (R) as an analogous displacement sensor a Hall-element (A) is fixedly positioned in the housing (1) in displacement direction of the slider piston (16) and relative to the rod magnet (M), such that an analogous signal (SA) is generated by a transition (9) from a weak portion to a strong portion of the magnetic field which transition (9) is adjacent to the longitudinal mid of the rod magnet (M).

## Revendications

1. Distributeur à tiroir hydraulique (WS) avec un piston de distributeur (16) coulissant guidé linéairement dans un alésage de boîtier (15) d'un boîtier (1) sur une course déterminée (b), le piston pouvant coulisser dans la course (b) sur une section de course non ponctuelle (a) d'une plage de position neutre déterminée par superposition axiale des bords de commande entre le piston de distributeur (16) et l'alésage de boîtier (15), dans lequel le piston de distributeur (16) bloque le passage entre une admission de fluide sous pression (18) et au moins une connexion de consommateur (19, 20), alors qu'il connecte hors de la section de course (a) l'admission de fluide sous pression (18) avec une connexion de consommateur (19 ou 20), et avec un capteur de course (W) qui comporte un interrupteur lame souple (R) de production de signal positionné de manière fixe par rapport au boîtier et un aimant à barreau (M) positionné de manière fixe par rapport au piston de distributeur et avec un axe longitudinal du barreau au moins sensiblement parallèle à la direction de coulissement du piston de distributeur, comme actionneur de l'interrupteur lame souple (R), dans lequel l'interrupteur lame souple (R) réagit avec différents signaux à des plages fortes et faibles (6, 7, 8 ; 10) du champ de force (K) de l'aimant à barreau (M) lors d'un déplacement de coulissement relatif de l'aimant à barreau (M), **caractérisé en ce que** l'aimant à barreau (M) est agencé dans une pièce d'extension (24) du piston de distributeur (16) et l'interrupteur lame souple (R) est agencé dans ou sur une pièce adjointe du boîtier (22) constituée au moins en partie d'un matériau non magnétique, **en ce que** la pièce d'extension (24) s'engage dans la pièce adjointe du boîtier (22), et **en ce que** l'aimant à barreau (M) et l'interrupteur lame souple (R) sont positionnés en direction de coulissement du piston de distributeur (16) l'un par rapport à l'autre et par rapport à la section de course (a) représentant la plage de position neutre de telle sorte que, lors d'un coulissement du piston de distributeur (16) sur base d'une plage faible (10) de l'aimant à barreau, l'interrupteur lame souple (R) émet un signal (SD) représentant la section de course (a) qui détermine la plage de position neutre pour commander des points de mise en marche et de mise à l'arrêt d'une pompe connectée à l'admission de fluide sous pression (18).

2. Distributeur à tiroir selon la revendication 1, **caractérisé en ce que** l'aimant à barreau (M) présente un rapport longueur-épaisseur ou longueur-diamètre de 3:1 à 6:1, et préférablement de 4:1 à 5:1.

3. Distributeur à tiroir selon la revendication 1, **caractérisé en ce que** l'aimant à barreau (M) est constitué d'un alliage fritté aluminium-nickel-cobalt.

4. Distributeur à tiroir selon la revendication 1, **caractérisé en ce que** la pièce adjointe du boîtier (22) comporte une plaque de support (25) pour l'interrupteur lame souple (R) qui peut être déplacée dans une direction de déplacement (5) du piston de distributeur (16).

5. Distributeur à tiroir selon la revendication 4, **caractérisé en ce que** la plaque de support (25) comporte des moyens de fixation (27) pour l'interrupteur lame souple (R) décalés en direction de déplacement (5) par rapport aux moyens de fixation (26) de la plaque de support sur la pièce adjointe du boîtier (22) et peut être montée sur la pièce adjointe du boîtier (22) dans deux positions décalées de 180° dans lesquelles les moyens de fixation (27) pour l'interrupteur lame souple (R) sont espacés du boîtier (1) à même distance en direction de déplacement du piston de distributeur (16).

6. Distributeur à tiroir selon la revendication 1, **caractérisé en ce qu'**il est un distributeur à tiroir 3/3 ou 4/3 voies (WS) pour un moteur hydraulique qui peut être alimenté d'un côté ou de deux côtés par une pompe à vitesse réglable, préférablement pour un chariot élévateur, et **en ce que** les points de mise en marche et de mise à l'arrêt de la pompe sont contrôlés à l'aide du signal (SD).

7. Distributeur à tiroir selon au moins l'une des revendications précédentes, **caractérisé en ce que**, outre l'interrupteur lame souple (R) comme capteur de course analogique dans la pièce adjointe du boîtier (22), un capteur à effet Hall (H) est positionné en position fixe par rapport au boîtier en direction de coulissement du piston de distributeur (16) par rapport à l'aimant à barreau (M) de telle sorte qu'un signal analogique (SA) peut être produit dans la course (b) du piston de distributeur (16) sur base d'une transition de champ de force (9) adjacente en direction du milieu de la longueur de l'aimant à barreau d'une plage faible du champ de force (10) vers une plage forte (6).
